# EUROPÄISCHE PATENTSCHRIFT

(11) **EP 0 974 387 B1**
(45) Veröffentlichungstag und Bekanntmachung des Hinweises auf die Patenterteilung: **09.04.2003**
(21) Anmeldenummer: 99109172.9
(22) Anmeldetag: 10.05.1999
(51) Int. Cl.: B01D 39/08, A47L 9/14

(54) **Staubfilterbeutel**
Dust filter bag
Sac filtrant à poussiéres

(30) Priorität: 21.07.1998 DE 19832611
(43) Veröffentlichungstag der Anmeldung: 26.01.2000
(73) Patentinhaber: Carl Freudenberg KG, 69469 Weinheim (DE)
(72) Erfinder: Schlör, Ulrich, 64297 Darmstadt (DE); Veeser, Klaus, Dr., 69469 Weinheim (DE)

(56) Entgegenhaltungen:
- EP-A- 0 338 479
- EP-A- 0 893 151
- DE-A- 19 544 790
- US-A- 4 374 888
- US-A- 5 306 534
- US-A- 5 647 881

## Beschreibung

### Technisches Gebiet

Die Erfindung betrifft einen Staubfilterbeutel aus einer mit einer Papierschicht zusammenlaminierten Faserschicht. An diese Filterbeutel werden verschiedenste Anforderungen gestellt. Ein Ziel besteht darin, eine hohe Filterwirkung, d.h. einen hohen Abscheidungsgrad zu erhalten. Hierzu müssen die Filterporen ausreichend klein sein. Gleichzeitig dürfen die Filterporen des Staubfilterbeutels aber auch nicht verstopfen, damit eine hohe Saug- oder Blasleistung, beispielsweise eines Staubsaugers, erhalten bleibt und ein Auswechseln des Staubfilterbeutels vor Erreichen einer bestimmten Füllmenge allein deswegen vermieden wird.

Weiterhin müssen die Staubfilterbeutel eine ausreichende mechanische Festigkeit aufweisen, um während der Anbringung oder in gefülltem Zustand nicht aufzureißen oder zu platzen. Auch für die Herstellung der Beutel mittels mehrerer Faltvorgänge ist eine entsprechende Festigkeit erforderlich.

### Stand der Technik

Staubfilterbeutel, die aus einem porösen Vliesstoff und einem Filterpapier bestehen, sind aus der EP 0 635 297 A1 bekannt und werden zu doppellagigen Staubfilterbeuteln verarbeitet. Als Vliesstoff kann ein Meltblown-Feinfaservlies zum Einsatz kommen, das die Innenseite des Staubfilterbeutels bedeckt und den Staubfilterbeutel verstärkt. Der Verstärkungseffekt ist nicht befriedigend.

Weitere Staubfilterbeutel sind aus der EP 0 338 479 B1 bekannt. Der dort beschriebene Staubfilterbeutel besteht aus einer Filterpapier-Außenlage und einem innenliegenden Vliesstoff. Der Vliesstoff ist als Feinfaservliesstoff ausgebildet und ebenfalls auf der Anströmseite angeordnet. Dabei können die feinen Fasern des Feinfaservliesstoffs im thermoplastischen Zustand direkt auf dem Filterpapier abgelegt und mit diesem verbunden sein. Der Feinfaservliesstoff kann mit einem Stützelement verbunden sein, welches ebenfalls aus Vliesstoff besteht. Zur Fertigung des Rohbeutels wird aus dem Laminat ein Schlauch gebildet, der mit einer Längsnaht verschlossen wird. Anschließend werden auf der Bodenfalztrommel aus dem endlosen Schlauch Stücke mit endlicher Länge abgeschnitten. Durch einen Blasimpuls sollen die Schlauchenden an einer Seite geöffnet werden, um die Ausbildung von Laschen zu gewährleisten, die umgeschlagen und aufeinandergeklebt werden. Da jedoch die beiden innenliegenden Vliesstofflagen beim Schneideprozeß miteinander leicht verschweißt werden, lassen sie sich mit dem Blasimpuls nicht mehr sicher öffnen.

Aus der DE 196 06 718 A1 ist weiterhin eine mehrlagige Filtertüte bekannt, die eine erste innere Lage aus einem Feinfaservlies, eine zweite äußere Lage aus einem Kunststoff-Wirrfaser-Material und eine in Strömungsrichtung vor der ersten Lage angeordnete dritte Lage aus einem Papierwerkstoff aufweist. Hierdurch wird die filtertechnische Wirksamkeit der Lage aus Papierwerkstoff hergestellt, da bei außenseitiger Anordnung die eigentliche Filterwirkung vorher erfolgt.

In der älteren Anmeldung EP-A-0.893.151 (Priorität: 24.07.1997 DE 197 31860; Anmeldetag : 30.04.1998; Veröffentlichungstag: 27.01.1998) sind Staubfilterbeutel beschrieben, die aus einer mit einer Papierschicht zusammenlaminierten Faserschicht bestehen, wobei die Faserschicht aus synthetischen, polymeren Fasern besteht und auf der Reingasseite der Papierschicht angeordnet ist.

Die Faserschicht enthält verschmolzene Polymerbereiche, durch die sie zusätzlich in sich selbst verfestigt and mit der Papierschicht verbunden ist.

Ein Nachteil der bekannten Staubfilterbeutel besteht darin, daß bei dem Aufsaugen von Wasser oder sonstiger mit der zu reinigenden Luft angesaugter Flüssigkeit die Filterpapierlage aufweicht und ihre Festigkeit einbüßt, wodurch beim Staubsaugen oder Herausnehmen des Staubfilterbeutels ein Aufreißen und eine Verschmutzung der Umgebung zu befürchten ist. Die Filterwirkung in bezug auf Feinstpartikel ist wenig befriedigend.

### Darstellung der Erfindung

Dadurch, daß die Faserschicht verschmolzene Polymerbereiche enthält und durch die Polymerbereiche zusätzlich in sich selbst verfestigt und mit der Papierschicht verbunden ist und daß die Polymerbereiche eine Verschweißfläche von 1 bis 3 % der Oberfläche aufweisen, führt ein Festigkeitsverlust der Papierschicht nicht mehr zur Beschädigung des Staubfilterbeutels. Selbst bei einem Aufreißen der Papierschicht im Innern des Staubfilterbeutels wird ein Austritt von Staubteilchen aus dem Inneren des Staubfilterbeutels durch die außenliegende Faserschicht vermieden. Durch eine Verschweißfläche der Polymerbereiche von 1 bis 3 % der Oberfläche wird eine ausreichende Laminatfestigkeit bei tolerierbarer Erhöhung der Druckdifferenz erreicht. Weiterhin hat sich eine Mindestausdehnung der Polymerbereiche von 1 mm in der Länge und/oder Breite, gegebenenfalls auch als Durchmesser, zur Herstellung einer ausreichenden Haftung der Faserstruktur auf der Papierschicht als besonders geeignet herausgestellt.

Trotz der Möglichkeit der Wasseraufnahme kann der für die Erzeugung von Faltungen vorteilhafte Einsatz der Papierschicht beibehalten werden. Durch die Papierschicht wird nämlich die Faltbarkeit des Staubfilterbeutels gegenüber einer reinen Faserschicht aus Polymerfasem erst ermöglicht. Die Faltbarkeit kann durch ein dichteres Muster der verschmolzenen Polymerbereich im Bereich der Kanten verbessert werden.

Die Polymerbereiche können zumindest teilweise in die Papierschicht penetriert sein, in der sie eine zusätzliche und zähharte Verfestigung der Faserstruktur bewirken. Die brüchige Struktur der Papierbindung wird hierdurch positiv verändert. Die Feuchtigkeitsbeständigkeit und/oder Weiterreißfestigkeit der Papierschicht wird durch die Polymerbereiche unbedingt verbessert.

Dabei kann die Dicke des Polymerbereichs geringer als die Dicke der isoliert aufeinanderliegenden Schichten sein und insbesondere aber geringer als die Dicke der Papierschicht außerhalb des Polymerbereichs. Im Polymerbereich ist dabei die Gasdurchlässigkeit auf einen Bruchteil des Wertes außerhalb des Polymerbereichs verringert. Die aus synthetischen, polymeren Fasern bestehende Faserschicht ist in diesem Bereich zu einem kompakten Material verdichtet.

Die Fasern können elektrostatisch aufgeladen sein, um eine Verbesserung der Filterwirkung in bezug auf Feinststäube zu erzielen.

Ergänzend zu der auf der Reingasseite angeordneten Faserschicht aus polymeren Fasern kann gegebenenfalls auf der Staubluftseite eine ergänzende, weitere Faserschicht aus synthetischen, polymeren Fasern vorgesehen sein und eine weitere Verbesserung bestimmter Eigenschaften bewirken. Hierdurch muß aber eine Verteuerung des Staubfilterbeutels in Kauf genommen werden. Im Rahmen der vorliegenden Erfindung wird daher eine Ausführung bevorzugt, bei der nur auf der Reinluftseite eine Schicht aus synthetischen, polymeren Fasern vorgesehen ist.

Die Faserschicht kann aus einem zumindest eigenfesten Vliesstoff bestehen, um sicher zu stellen, daß auch bei völliger Zerstörung der Papierschicht der Staubfilterbeutel ausreichend stabil und filterwirksam bleibt. Eine hygienische Entsorgung des zumindest teilweise mit Staub gefüllten Staubfilterbeutels ist somit auch in solchen Fällen möglich. Der Vliesstoff kann durch eine gegenseitige Verklebung und/oder Verschlingung der ihn bildenden Fasern und/oder Fäden feuchtigkeitsstabil verfestigt sein und gegebenenfalls verschmolzene Polymerbereiche enthalten und durch diese Bereiche zusätzlich in sich selbst verfestigt und mit der Papierschicht verbunden sein. Dabei hat es sich als vorteilhaft bewährt, wenn die Polymerbereiche fensterartig verschmolzen sind. Hierdurch werden Verfestigungszonen erhalten, die dem Vliesstoff eine verbesserte Festigkeit verleihen, insbesondere wenn die Polymerbereiche balkenförmig gestaltet oder ausgebildet sind.

Die Polymerbereiche können zur Bildung von Staubkammem nach Art eines Waben- oder Waffelmusters verteilt sein. Während sich das Papier aufgrund seiner Papierbindung gegenüber dem darauf während der bestimmungsgemäßen Verwendung des Staubfilterbeutels lastenden Luftdruck starr und unnachgiebig verhält, ergibt sich auf der Reinluftseite eine elastische Deformierung der Faserschicht in den Zwischenzonen des Waben- oder des Waffelmusters, was zur Bildung von Staubkammern führt, in denen sich Feinststäube ansammeln können. Insbesondere in bezug auf die Abscheidung von Allergenen hat sich daher eine solche Ausbildung ausgezeichnet bewährt.

Die die Polymerbereiche bildenden Balken müssen nicht zusammenhängend ausgebildet sein, sondern können auch untereinander versetzt, das heißt ohne Berührung angeordnet werden.

In einer Weiterbildung ist der Staubfilterbeutel so ausgebildet, daß die Faserschicht zumindest zwei Teilschichten umfaßt. Das ist dann von besonderem Vorteil, wenn die Teilschichten unterschiedliche Funktionen erfüllen sollen.

Insbesondere kann die von der Papierschicht des Staubfilterbeutels abgewandte Teilschicht aus einem Spinnvlies bestehen. Dieses Spinnvlies weist in der Regel eine hohe Widerstandsfähigkeit gegen Abrieb auf. Dies ist dann wichtig, wenn der Staubfilterbeutel während der Herstellung, der Anbringung oder des Betriebs mit rauhen Oberflächen in Kontakt kommt.

Weiterhin kann zumindest eine an die Papierschicht angrenzende Teilschicht vorhanden sein, die aus Mikrofasem besteht. In dieser Schicht, die aus einem Melt-Blown-Vlies bestehen kann, werden verbesserte Filtereigenschaften insbesondere in bezug auf Feinststäube erreicht, wodurch der Einsatzbereich des Staubfilterbeutels ausgedehnt wird.

Eine besonders gute Reinigungswirkung bei ausreichender mechanischer Festigkeit des Staubfilterbeutels erhält man dann, wenn die aus Mikrofasern bestehende Faserschicht ein Flächengewicht von 5 g/m² bis 40 g/m² (ISO 536) hat bei einem Gesamtgewicht der Faserschicht von 5 bis 50 g/m². Die Papierschicht hat in vorteilhafter Weise ein Flächengewicht von 20 g/m² bis 100 g/m² (ISO 536). Die Luftdurchlässigkeit des gebrauchsfertigen Produkts liegt bei 100 bis 300 l/m²s bei einem Differenzdruck von 200 Pa (DIN 53887).

Um die optimale Verarbeitbarkeit bei der Rohbeutelherstellung zur gewährleisten, muß der Staubfilterbeutel papierähnliche Eigenschaften aufweisen. Dies wird dadurch gewährleistet, daß die Vliesstoffschichten mit dem Papier ausreichend fest verbunden sind. Zur Erzielung einer ausreichenden Festigkeit im Bereich der Längsnaht der Rohbeutelfertigung wird vorzugsweise der Randbereich besonders verstärkt, was durch eine Verschweiß- und/oder Klebevorrichtung erfolgen kann.

Durch die Anordnung der Vliesstoffschicht auf der Reingasseite tritt beim Ablängen des Schlauches kein Verschweißen der Vliesstofflagen auf, so daß sich die Schlauchenden mit einem Blasimpuls sicher öffnen lassen.

### Kurzbeschreibung der Zeichnungen

Ein Ausführungsbeispiel der Erfindung ist in der Zeichnung dargestellt. Es zeigt die:
- Fig. 1: einen Schnitt durch einen dreilagigen Staubfilterbeutel, die
- Fig. 2: eine Draufsicht auf die von der Faserschicht gebildete Außenseite des Staubfilterbeutels mit den verschmolzenen Polymerbereichen, die
- Fig. 3a: einen Schnitt durch den dreilagigen Staubfilterbeutel aus Fig. 2 im Bereich der verschmolzenen Polymerbereiche, die
- Fig. 3b: eine rasterelektronenmikroskopische Darstellung des Schnitts aus Fig. 3a und die
- Fig. 4: einen aufgeschnittenen gefalteten Staubsaugerbeutel.

### Ausführung der Erfindung

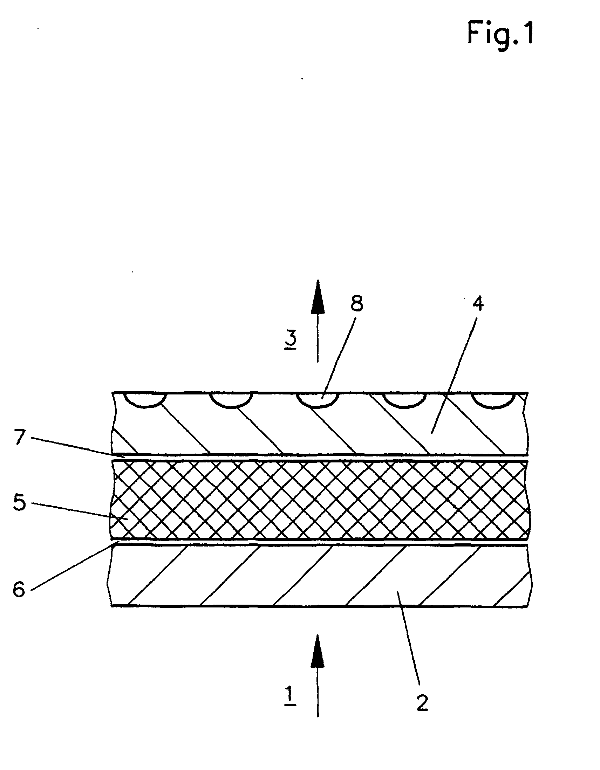

In Fig. 1 ist ein Staubfilterbeutel gemäß der Erfindung dargestellt. Er besteht aus einer der Staubgasseite oder Ansaugseite 1 zugewandten Papierschicht 2. Der Reinluftseite 3 zugewandt ist eine Faserschicht aus polymerem Material, die aus einem aus thermoplastischen Fasern bestehenden Spinnvliesstoff 4 gebildet ist. Zwischen der Papierschicht 2 und dem Spinnvliesstoff 4 befindet sich eine weitere Faserschicht aus polymerem Material, die aus einem Melt-Blown-Vliesstoff 5 aus thermoplastischen Fasern besteht.

Die Papierschicht 2 und der Melt-Blown-Vliesstoff 5 liegen in Fig. 1 im wesentlichen lose aufeinander, so daß ein Zwischenraum 6 vorhanden ist. Ebenso liegt der Spinnvliesstoff 4 lose auf dem Melt-Blown-Vliesstoff 5 auf, wodurch in Teilbereichen ein Zwischenraum 7 eingeschlossen wird.

Zur Erhöhung der Festigkeit des Spinnvliesstoffes 4 kann dieses durch Punktverschweißung an örtlich beabstandeten Stellen verfestigt sein, wodurch Oberflächenstrukturen 8 vorhanden sind.

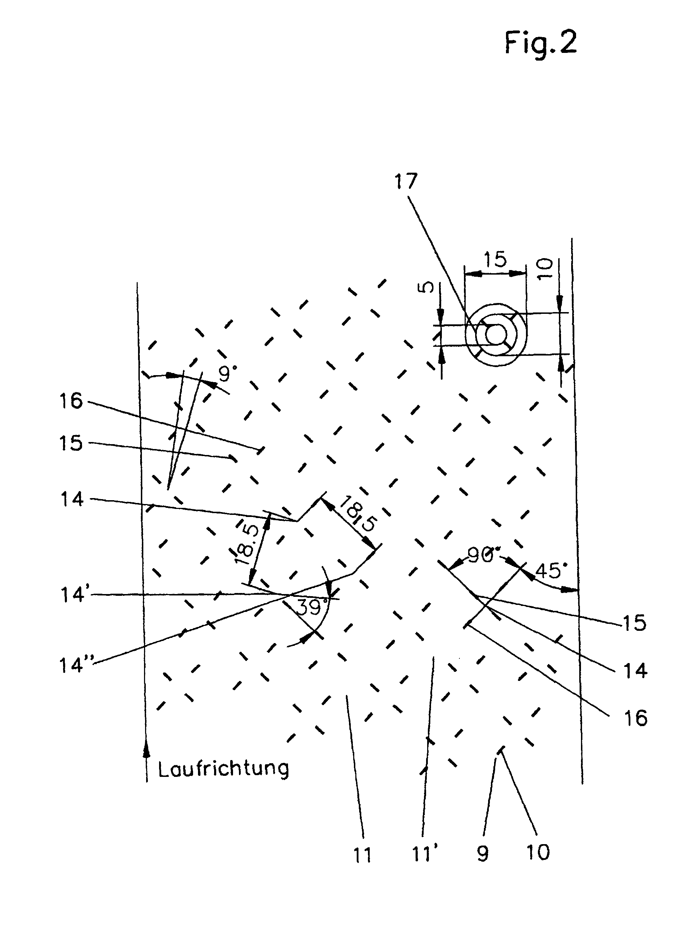

Fig. 2 zeigt die reingasseitige Oberfläche des Staubfilterbeutels. Man erkennt die verschmolzenen Polymerbereiche 9, welche in Form von Balken 10 vorliegen. Die Balken 10 sind untereinander versetzt angeordnet und berühren einander nicht. Sie können an sich einander in jedem beliebigen Muster zugeordnet und beispielsweise ein Waffel- oder ein Wabenmuster bilden. Zweckmäßigerweise sind die einzelnen Kammern 11, 11' hierbei durch Querverbindungen ineinander übergehend ausgebildet, um die insgesamt zur Verfügung stehende Filterfläche optimal zu nutzen und Druckspitzen in einzelnen Kammern zu vermeiden. Die Balkenstrukturen können zu diesem Zweck auch insgesamt durch eine Aufeinanderfolge von einzelnen Verschweißungszonen gebildet sein, die einen Abstand voneinander haben.

Die Balken 10 grenzen somit Staubtaschen 11, 11' ein, welche aufgrund der unzusammenhängenden Struktur der Polymerbereiche 9 beziehungsweise der Balken 10 untereinander verbunden sind und ineinander übergehen.

Da die Staubtaschen 11 nicht gegenseitig abgeschlossen sind, ist auch ein Materialaustausch von einer Staubtasche 11 in eine benachbarte Staubtasche 11' möglich, beispielsweise nach eingetretener Verstopfung der Poren der einen Kammer, wenn diejenigen einer benachbarten Kammer noch verfügbar sind.

Verschiedenste Formen der Anordnung der Balken oder anderer Polymerbereiche sind unter diesem Gesichtspunkt denkbar, um die Festigkeit zu erhöhen und um gleichzeitig eine Abgrenzung von Staubtaschen gegeneinander zuzulassen.

Dabei ist ein balkenförmiges Muster mit um ein Zentrum 14 herum angeordneten inneren Balken 15 und in Umfangsrichtung zu diesen um jeweils 90 Grad versetzt angeordneten äußeren Balken 16 dargestellt, wobei die Außenkreis 17 um die inneren Balken 15 mit dem Innenkreis der äußeren Balken 16 zusammenfällt. Die Balken 15, 16 erstrecken sich jeweils in einem Winkel von 45 Grad zur Laufrichtung vom Zentrum 14 weg.

Die Zentren 14, 14' und 14" liegen um 9 Grad im Uhrzeigersinn gegenüber der Laufrichtung und um 39 Grad im Uhrzeigersinn gegenüber einer zur Laufrichtung senkrechten Linie versetzt so, daß sie ein gleichwinkliges Dreieck bilden.

Grundsätzlich ist es auch möglich, anstelle von um die Zentren 14, 14' und 14" herum angeordneten Balken 15, 16 in den Zentren 14, 14' und 14" selbst angeordnete punktförmige Polymerbereiche zu verwenden. Allerdings nimmt hier bei gleicher Verbindungsfläche die Stabilität der Verbindung ab, da zwischen diesen Zentren keine weiteren Strukturen vorhanden sind. Allerdings ist der Materialaustausch von einer Staubtasche in die andere begünstigt, wodurch ein vorzeitiges Verstopfen von Teilbereichen vermieden wird.

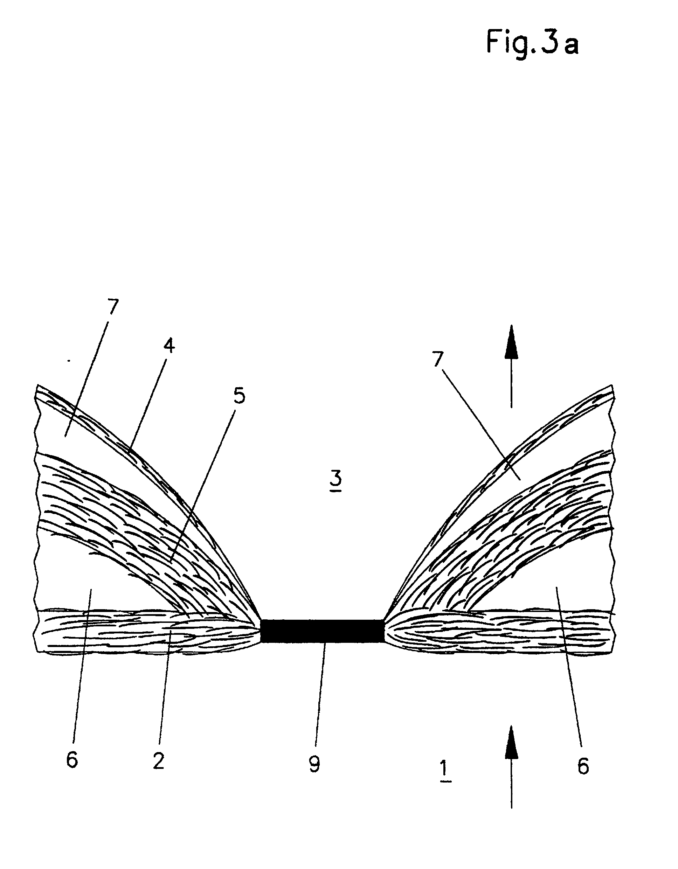

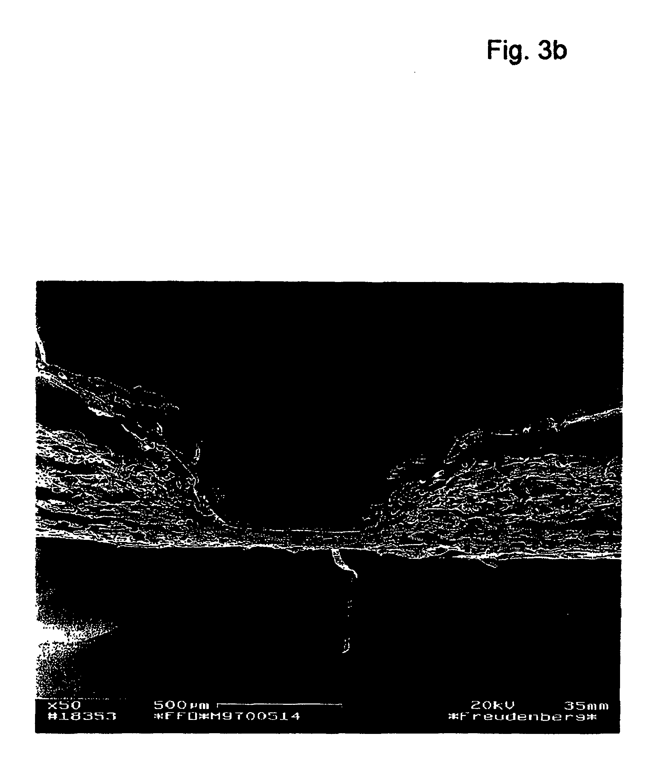

Die Fig. 3 zeigt in der Teildarstellung a einen Schnitt im Bereich der Polymerbereiche 9 beziehungsweise der Balken 10. Die Polymerbereiche 9 können durch Ultraschallkalandrierung erzeugt werden. Dabei wird das thermoplastische Material des Spinnvlieses 4 und des Meltblown-Vlieses 5 an vorherbestimmten Stellen zum Schmelzen gebracht und unter hohem Druck mit der Papierschicht 2 verbunden. Die Art des Papiers ist an sich ohne Bedeutung, sofern hinreichende Filtereigenschaften vorhanden sind.

Das geschmolzene thermoplastische Material des Spinnvliesstoffes 4 und des Meltblown-Vliesstoffs 5 dringt dabei zumindest teilweise in die Papierschicht 2 ein. In den Polymerbereichen 9 sind die Eigenschaften des Spinnvliesstoffs 4 und des Meltblown-Vliesstoffs 5 wegen der Kalandrierung nicht mehr erhalten, insbesondere sind diese Bereiche nicht mehr oder nur noch unwesentlich filteraktiv.

Die Dicke des Polymerbereichs 9 ist gegenüber der Dicke der Papierschicht 2 geringer, wodurch der Polymerbereich 9 besonders kompakt ist.

Zwischen den Polymerbereichen 9 werden von den Zwischenräumen 6 die Staubtaschen 11 gebildet, die den Feinststaub soweit aufnehmen, wie dieser nicht unmittelbar in dem Papier bzw. in dem Meltblown-Vliesstoffs 5 gespeichert wird. Zum Schutz des gegen Abrieb empfindlichen Meltblown-Vliesstoffs 5 dient der Spinnvliesstoff 4 mit höheren Festigkeitswerten und dafür relativ geringerer Filterwirkung. Im wesentlichen hat er die Aufgabe, das Meltblown-Vlies 5 vor Abrieb zu schützen und dem Staubfilterbeutel 12 eine wesentlich verbesserte Reißfestigkeit unter Vermeidung einer nennenswerten Beeinträchtigung der Filterwirkung insbesondere bei eintretender Benetzung zu verleihen. Es wird insbesondere vermieden, daß die Papierschicht 2 des Staubfilterbeutels 12 reißt und seine Filterwirkung völlig einbüßt. Es ist sogar möglich, daß die Papierschicht 2 nach eingetretener Benetzung während der bestimmungsgemäßen Verwendung wieder trocknet, ohne daß sich eine nennenswerte Beeinträchtigung der Filterwirkung ergibt.

Figur 3 b ist die rasterelektronenmikroskopische Darstellung der schematisch in Figur 3 a gezeigten Vlieskonfiguration.

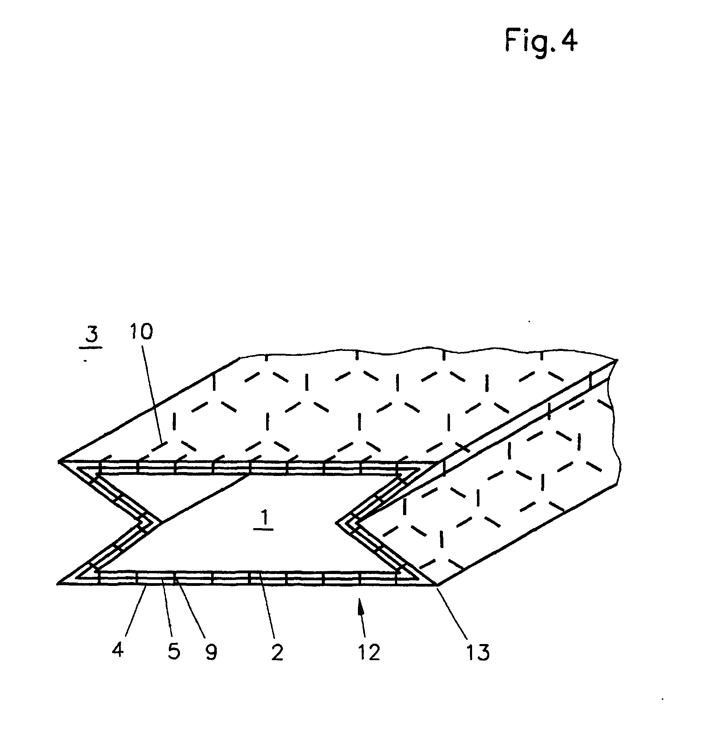

In Fig. 4 ist ein dreilagiger Staubfilterbeutel 12 mit mehreren Faltungen 13 dargestellt. Die Papierschicht 2, das Spinnvlies 4 und das Meltblown-Vlies 5 sind nicht ineinandergesteckt, sondern, ausgehend von einem Flächenmaterial, durch gemeinsames Falten zu dem Staubfilterbeutel 12 umgeformt worden.

Die Verbindung der Papierschicht 2, des Spinnvlieses 4 und des Meltblown-Vlieses 5 erfolgt über die Polymerbereiche 9. Gelangt Flüssigkeit in den Innenraum, der durch die der Staubluftseite zugewandten Papierschicht 2 begrenzt wird und weicht als Folge davon die Papierschicht 2 auf, so hält das Spinnvlies 4 den Staubfilterbeutel 12 somit zuverlässig zusammen.

Grundsätzlich kann an die Stelle des Spinnvliesstoffes 4 und des Meltblown-Vliesstoffs 5 ein einziger Vliesstoff aus polymeren Fasern treten, wenn die Filtereigenschaften und Festigkeitseigenschaften genügen.

Das Laminieren der Papierschicht 2 mit der Faserschicht 4, 5 kann mit allen gängigen Verfahren, wie Hotmeltkaschierung, Auftragung von Haftmassen usw. erfolgen, wird aber vorzugsweise durch thermisches Verschweißen durchgeführt.

Dabei können im Randbereich eine erhöhte Zahl von Polymerbereichen vorgesehen werden, um die Festigkeit im Bereich der Längsnaht der Rohbeutelfertigung zu erhöhen.

## Patentansprüche

1. Staubfilterbeutel aus einer mit einer Papierschicht (2) zusammenlaminierten Faserschicht, wobei die Faserschicht (4,5) aus synthetischen, polymeren Fasern besteht und auf der Reingasseite (3) der Papierschicht (2) angeordnet ist, wobei die Faserschicht (4,5) verschmolzene Polymerbereiche (9) enthält und durch die Polymerbereiche (9) zusätzlich in sich selbst verfestigt und mit der Papierschicht (2) verbunden ist, und wobei die Polymerbereiche (9) eine Verschweißfläche von 1 bis 3% der Oberfläche aufweisen und unter Bildung von ineinander übergehenden Staubkammem (11) nach Art eines Waben- oder Waffelmusters verteilt sind und in ihrer Länge und/oder Breite eine Ausdehnung von wenigstens 1 mm aufweisen.

2. Staubfilterbeutel nach Anspruch 1, **dadurch gekennzeichnet, daß** die Dicke des Polymerbereichs (9) geringer als die Dicke der unverbunden aufeinanderliegenden Papierschicht (2) und Faserschicht (4, 5) ist, insbesondere aber geringer als die Dicke der Papierschicht (2) außerhalb des Polymerbereichs (9).

3. Staubfilterbeutel nach einem der Ansprüche 1 oder 2, **dadurch gekennzeichnet, daß** die Fasern elektrostatisch aufgeladen sind.

4. Staubfilterbeutel nach einem der Ansprüche 1 bis 3, **dadurch gekennzeichnet, daß** die Faserschicht (4,5) aus einem zumindest eigenfesten Vliesstoff besteht.

5. Staubfilterbeutel nach einem der Ansprüche 1 bis 4, **dadurch gekennzeichnet, daß** der Vliesstoff durch eine gegenseitige Verklebung und/oder Verschlingung der ihn bildenden Fasern und/oder Fäden verfestigt ist.

6. Staubfilterbeutel nach einem der Ansprüche 1 bis 5, **dadurch gekennzeichnet daß** die Polymerbereiche (9) fensterartig ausgebildet sind.

7. Staubfilterbeutel nach einem der Ansprüche 1 bis 6, **dadurch gekennzeichnet, daß** die Polymerbereiche (9) balkenförmig gestaltet oder ausgebildet sind.

8. Staubfilterbeutel nach einem der Ansprüche 1 bis 7, **dadurch gekennzeichnet, daß** die Polymerbereiche (9) untereinander versetzt und ohne Berührung angeordnet sind.

9. Staubfilterbeutel nach einem der Ansprüche 1 bis 8, **dadurch gekennzeichnet, daß** die Polymerbereiche (9) zumindest teilweise in die Papierschicht (2) penetriert sind.

10. Staubfilterbeutel nach einem der Ansprüche 7 bis 9, **dadurch gekennzeichnet, daß** die Polymerbereiche (9) um ein Zentrum (14) herum als innere Balken (15) und in Umfangsrichtung zu diesen um jeweils 90 Grad versetzte äußere Balken (16) angeordnet sind.

11. Staubfilterbeutel nach einem der Ansprüche 1 bis 10, **dadurch gekennzeichnet, daß** die Faserschicht (4,5) zumindest zwei Teilschichten umfaßt.

12. Staubfilterbeutel nach Anspruch 11, **dadurch gekennzeichnet, daß** die von der Papierschicht (2) abgewandte Teilschicht (4) aus einem Spinnvliesstoff besteht.

13. Staubfilterbeutel nach Anspruch 11 oder 12, **dadurch gekennzeichnet, daß** zumindest eine an die Papierschicht (2) angrenzende Teilschicht (5) vorhanden ist, die aus Mikrofasern besteht.

14. Staubfilterbeutel nach Anspruch 13, **dadurch gekennzeichnet, daß** die aus Mikrofasern bestehende Teilschicht (5) ein Flächengewicht von 5 bis 40 g/m² aufweist.

15. Staubfilterbeutel nach einem der Ansprüche 1 bis 14, **dadurch gekennzeichnet, daß** die Faserschicht (4,5) insgesamt ein Flächengewicht von 5 g/m² bis 50 g/m² hat.

16. Staubfilterbeutel nach einem der Ansprüche 1 bis 15, **dadurch gekennzeichnet, daß** die Papierschicht (2) ein Flächengewicht von 20 g/m² bis 100 g/m² hat.

17. Staubfilterbeutel nach einem der Ansprüche 1 bis 16, **dadurch gekennzeichnet, daß** der Staubfilterbeutel als Staubsaugerbeutel (1 ) ausgebildet ist.

18. Staubfilterbeutel nach einem der Ansprüche 1 bis 17, **dadurch gekennzeichnet, daß** die Papierschicht (2) und die Faserschicht (4, 5) im Randbereich einen höheren Anteil von Polymerbereichen (9) aufweisen.

## Claims

1. A dust filter bag made of a fibre layer laminated together with a paper layer (2), the fibre layer (4, 5) comprising synthetic, polymeric fibres and being arranged on the pure-gas side (3) of the paper layer (2), the fibre layer (4, 5) containing fused polymer regions (9) and, by means of the polymer regions (9), being additionally intrinsically strengthened and connected to the paper layer (2), and the polymer regions (9) having a welded area of 1 to 3% of the surface and being distributed in the manner of a honeycomb or waffle pattern, forming dust chambers (11) that merge into one another and their length and/or width having an extent of at least 1mm.

2. A dust filter bag according to claim 1, **characterized in that** the thickness of the polymer region (9) is less than the thickness of the unconnected paper layer (2) and fibre layer (4, 5) lying on each other, but in particular less than the thickness of the paper layer (2) outside the polymer region (9).

3. A dust filter bag according to either of claims 1 and 2, **characterized in that** the fibres are electrostatically charged.

4. A dust filter bag according to any one of claims 1 to 3, **characterized in that** the fibre layer (4, 5) comprises an at least intrinsically strong nonwoven.

5. A dust filter bag according to any one of claims 1 to 4, **characterized in that** the nonwoven is strengthened by mutual adhesive bonding and/or intertwining of the fibres and/or filaments forming it.

6. A dust filter bag according to any one of claims 1 to 5, **characterized in that** the polymer regions (9) are designed like windows.

7. A dust filter bag according to any one of claims 1 to 6, **characterized in that** the polymer regions (9) are shaped or designed in bar shapes.

8. A dust filter bag according to any one of claims 1 to 7, **characterized in that** the polymer regions (9) are offset from one another and arranged without contact.

9. A dust filter bag according to any one of claims 1 to 8, **characterized in that** the polymer regions (9) penetrate at least partly into the paper layer (2).

10. A dust filter bag according to any one of claims 7 to 9, **characterized in that** the polymer regions (9) are arranged around a centre (14) as inner bars (15) and in the circumferential direction in relation thereto as outer bars (16) respectively offset by 90°.

11. A dust filter bag according to any one of claims 1 to 10, **characterized in that** the fibre layer (4, 5) comprises at least two part layers.

12. A dust filter bag according to claim 11, **characterized in that** the part layer (4) facing away from the paper layer (2) comprises a spun-bonded nonwoven.

13. A dust filter bag according to either of claims 11 and 12, **characterized in that** there is at least one part layer (5) which adjoins the paper layer (2) and consists of microfibres.

14. A dust filter bag according to claim 13, **characterized in that** the part layer (5) comprising microfibres has a weight per unit area of 5 to 40 g/m².

15. A dust filter bag according to any one of claims 1 to 14, **characterized in that** the fibre layer (4, 5) has an overall weight per unit area of 5 g/m² to 50 g/m².

16. A dust filter bag according to any one of claims 1 to 15, **characterized in that** the paper layer (2) has a weight per unit area of 20 g/m² to 100 g/m².

17. A dust filter bag according to any one of claims 1 to 16, **characterized in that** the dust filter bag is designed as a vacuum cleaner bag (1).

18. A dust filter bag according to any one of claims 1 to 17, **characterized in that** the paper layer (2) and the fibre layer (4, 5) have a higher proportion of polymer regions (9) in the edge region.

## Revendications

1. Sac filtrant à poussière formé d'une couche de fibres laminée avec une couche de papier (2), la couche de fibres (4, 5) étant formée de fibres polymères synthétiques et étant située sur le côté (3) de la couche de papier (2) correspondant au gaz propre, la couche de fibres (4, 5) comportant des zones polymères fondues (9) et étant en soi consolidée, en plus, par les zones polymères (9) et reliée à la couche de papier (2), et les zones polymères (9) ayant une surface soudée qui représente entre 1 et 3% de la surface et étant divisées de manière à former un dessin à alvéoles ou à gaufres tout en formant des chambres à poussière (11) qui se fondent les unes dans les autres, et ayant une étendue d'au moins 1 mm en longueur et/ou en largeur.

2. Sac filtrant à poussière selon la revendication 1, **caractérisé en ce que** l'épaisseur de la zone polymère (9) est inférieure à l'épaisseur de la couche de papier (2) et de la couche de fibres (4, 5) posées l'une sur l'autre sans être reliées et, notamment, inférieure à l'épaisseur de la couche de papier (2) à l'extérieur de la zone polymère (9).

3. Sac filtrant à poussière selon l'une des revendications 1 ou 2, **caractérisé en ce que** les fibres sont chargées électrostatiquement.

4. Sac filtrant à poussière selon l'une des revendications 1 à 3, **caractérisé en ce que** la couche de fibres (4, 5) est formée d'un non-tissé ayant au moins une stabilité inhérente.

5. Sac filtrant à poussière selon l'une des revendications 1 à 4, **caractérisé en ce que** le non-tissé est consolidé par un collage mutuel et/ou un entrelacement des fibres et/ou fils dont il est formé.

6. Sac filtrant à poussière selon l'une des revendications 1 à 5, **caractérisé en ce que** les zones polymères (9) sont exécutées à la manière de fenêtres.

7. Sac filtrant à poussière selon l'une des revendications 1 à 6, **caractérisé en ce que** les zones polymères (9) ont la forme de barres ou sont exécutées de manière à avoir la forme de barres.

8. Sac filtrant à poussière selon l'une des revendications 1 à 7, **caractérisé en ce que** les zones polymères (9) sont décalées les unes par rapport aux autres et disposées de manière à ne pas être en contact.

9. Sac filtrant à poussière selon l'une des revendications 1 à 8, **caractérisé en ce que** les zones polymères (9) pénètrent au moins partiellement dans la couche de papier (2).

10. Sac filtrant à poussière selon l'une des revendications 7 à 9, **caractérisé en ce que** les zones polymères (9) sont disposées en tant que barres intérieures (15) autour d'un centre (14) et en tant que barres extérieures (16) décalées à chaque fois de 90 degrés par rapport à celles-ci dans la direction circonférentielle.

11. Sac filtrant à poussière selon l'une des revendications 1 à 10, **caractérisé en ce que** la couche de fibres (4, 5) comprend au moins deux couches partielles.

12. Sac filtrant à poussière selon la revendication 11, **caractérisé en ce que** la couche partielle (4) éloignée de la couche de papier (2) est formée d'un non-tissé par filature directe.

13. Sac filtrant à poussière selon la revendication 11 ou 12, **caractérisé en ce qu'**il existe au moins une couche partielle (5) qui est formée de microfibres, contiguë à la couche de papier (2).

14. Sac filtrant à poussière selon la revendication 13, **caractérisé en ce que** la couche partielle (5) formée de microfibres a un grammage compris entre 5 et 40 g/m².

15. Sac filtrant à poussière selon l'une des revendications 1 à 14, **caractérisé en ce que** la couche de fibres (4, 5) a, dans l'ensemble, un grammage compris entre 5 g/m² et 50 g/m².

16. Sac filtrant à poussière selon l'une des revendications 1 à 15, **caractérisé en ce que** la couche de papier (2) a un grammage compris entre 20 g/m² et 100 g/m².

17. Sac filtrant à poussière selon l'une des revendications 1 à 16, **caractérisé en ce que** le sac filtrant à poussière est exécuté en tant que sac pour aspirateur (1).

18. Sac filtrant à poussière selon l'une des revendications 1 à 17, **caractérisé en ce que** la couche de papier (2) et la couche de fibres (4, 5) ont une proportion plus élevée de zones polymères (9) dans la zone des bords.
